(19) Europäisches Patentamt

European Patent Office

Office européen des brevets

(11) **EP 3 067 848 A1**

(12) **EUROPEAN PATENT APPLICATION**

(43) Date of publication:
14.09.2016 Bulletin 2016/37

(21) Application number: 15305350.9

(22) Date of filing: 09.03.2015

(51) Int Cl.:
*G06Q 20/02* (2012.01)      *G06Q 20/04* (2012.01)
*G06Q 20/32* (2012.01)      *G06Q 20/38* (2012.01)
*G06Q 20/22* (2012.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: GEMALTO SA
92190 Meudon (FR)

(72) Inventors:
• Aillaud, Christophe
13881 Gemenos Cedex (FR)
• Chene, Gilles
13881 Gemenos Cedex (FR)

(74) Representative: Scheer, Luc et al
Gemalto SA
525, Avenue du Pic de Bertagne
CS 12023
13881 Gémenos Cedex (FR)

(54) **Method and first and second server for transferring voucher data**

(57) The invention relates to a method 20 for transferring voucher data.

According to the invention, the method comprises the following steps. An emitter device 110 sends to a first server 14 data 22 corresponding to at least one voucher and at least one identifier relating to a receiver device. The first server sends to a bank server 16 a request 28 for performing a bank transfer accompanied with the data corresponding to at least one voucher, data relating to a bank account to be debited and the at least one identifier relating to a receiver device. The bank server sends to a second server 18 a request 210 for crediting the identified receiver device accompanied with the data corresponding to at least one voucher. The second server gets, based upon the data corresponding to at least one voucher, voucher data. The second server sends to the receiver device a request 212 for crediting a receiver device account accompanied with the voucher data.

The invention also relates to a corresponding first and second server for transferring voucher data.

Fig. 2

## Description

**Field of the invention:**

The invention relates generally to a method for transferring voucher data.

Furthermore, the invention also pertains to a first server for transferring voucher data.

Finally, the invention is a second server for transferring voucher data as well.

**State of the art:**

As known per se, a plastic card that has either a barcode or a magnetic stripe allows identifying a gift voucher. The identified voucher allows getting from a back-end system additional voucher information, such as an available total amount.

However, such a plastic card has to be physically delivered to an individual either in a shop or through a mail. Such a voucher delivery process may last time.

Furthermore, the gift voucher identifier may be easily copied.

Thus, there is a need to provide a solution that allows delivering, in an efficient, quick, simple and secure way, to an individual voucher data.

**Summary of the invention:**

The invention proposes a solution for satisfying the just herein above specified need by providing a method for transferring voucher data.

According to the invention, the method comprises the following steps. An emitter device sends to a first server data corresponding to at least one voucher and at least one identifier relating to a receiver device. The first server sends to a bank server a request for performing a bank transfer accompanied with the data corresponding to at least one voucher, data relating to a bank account to be debited and the at least one identifier relating to a receiver device. The bank server sends to a second server a request for crediting the identified receiver device accompanied with the data corresponding to at least one voucher. The second server gets, based upon the data corresponding to at least one voucher, voucher data. The second server sends to the receiver device a request for crediting a receiver device account accompanied with the voucher data.

The principle of the invention consists in that an emitter device transmits to a first server data allowing an identified receiver device to get one or several vouchers to be included in voucher data. Then, the first server requests a bank server to debit from a bank account an amount (or the like) corresponding to the voucher(s). After a bank debit of a user account, a second server transmits to the receiver device the voucher data to be credited on a user account.

Contrary to the aforementioned prior art solution, the invention voucher transfer operation is an online operation that allows transferring digitally voucher data, in an efficient, quick and simple way, from an emitter device to a receiver device.

Compared to the aforementioned prior art solution, the invention on-line voucher transfer operation allows a receiver device user to get quickly the voucher data and therefore to save time with respect to the prior art solution. The receiver device user does not need to move to a desk office or a post office to get the voucher data.

Since the invention voucher transfer operation is done from an emitter device side, the voucher transfer operation allows facilitating a transfer of voucher(s) from an emitter device and therefore to save time. The emitter device user does not need to move to a desk office or a post office to transfer the voucher data.

The proposed invention solution allows enhancing the user experience and is thus convenient for the emitter device user and the receiver device user as well.

Preferably, the emitter device carries out a generation of a voucher data signature by signing the data corresponding to one or several vouchers and possibly the receiver device identifier(s). Thus, the voucher transfer signature can be verified by the first server, the bank server, the second server and/or the receiver device.

Thanks to one or several preferable additional security features, such as a voucher data signature, an emitter device user authentication, one or several server authentications, data ciphering and/or other(s) security operation(s), the invention voucher transfer operation is also secure.

According to a further aspect, the invention is a first server for transferring voucher data.

According to the invention, the first server is configured to receive from an emitter device data corresponding to at least one voucher and at least one identifier relating to a receiver device. The first server is configured to send to a bank server a request for performing a bank transfer accompanied with the data corresponding to at least one voucher, data relating to a bank account to be debited and the at least one identifier relating to a receiver device.

According to still a further aspect, the invention is a second server for transferring voucher data.

According to the invention, the second server is configured to receive from a bank server a request for crediting an identified receiver device accompanied with data corresponding to at least one voucher. The second server is configured to get, based upon the data corresponding to at least one voucher, voucher data. And the second server is configured to send to the identified receiver device a request for crediting the receiver device accompanied with the voucher data.

It is to be noted that the first server and the second server may either be separate or constitute one and the same server.

**Brief description of the drawings:**

Additional features and advantages of the invention will be more clearly understandable after reading a detailed description of one preferred embodiment of the invention, given as an indicative and non-limitative example, in conjunction with the following drawings:

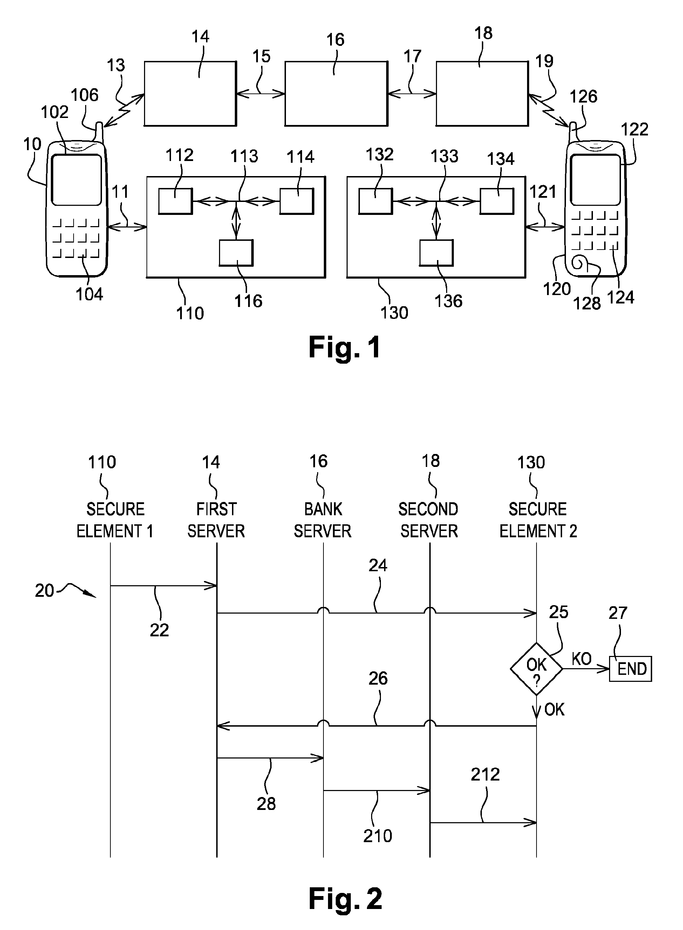

-    Figure 1 illustrates a simplified schematic view of a first chip, as an emitter, comprised within a first mobile terminal, a first and a second server, a bank server and a second chip, as a receiver, comprised within a second terminal, that implement the invention method; and
-    Figure 2 represents an example of a message flow between the first and the second chip, the first and the second server and the bank server of figure 1, in which the first server receives from the first chip data corresponding to a voucher(s) and a second chip identifier, sends to the bank server the received data and a request of a bank transfer and, once this latter is performed, the bank server forwards the received data to the second server that converts it to voucher data and requests the second chip to credit a user account with the voucher data.

Detailed **description:**

Herein under is considered an embodiment in which the invention method for transferring voucher data is implemented notably by a chip, as a Secure Element (or SE) and an emitter device incorporated within a user terminal, and another chip, as an SE and a receiver device incorporated within another user terminal.

Within the present description, an SE is a smart object that includes a chip that protects, as a tamper resistant component, physically access to stored data and is intended to communicate data with the outside world, like e.g. a mobile (tele)phone, as an SE host device.

According to another embodiment, instead of an SE, the emitter device and/or the receiver device is(are) a user terminal, as a standalone device, i.e. that does not cooperate with any other device, or a Trusted Execution Environment (or TEE), as a secure area of the main processor of the user terminal and a secured runtime environment, that performs the functions that the SE performs and that are described infra.

Naturally, the herein below described embodiment is only for exemplifying purposes and is not considered to reduce the scope of the invention.

**Figure 1** shows schematically a mobile equipment 10 that includes a first chip 110 and is connected, over a first remote server 14, a bank server 16 and a second server 18, to a ConTact-Less mobile phone 120 that includes a second chip 130.

Within the present description, the adjective "ConTact-Less" (or CTL) used within the expression "CTL mobile phone 120" means notably that the phone 120 communicates via a Short Range (or SR) Radio-Frequency (or RF) link by using, for instance, International Standardization Organization/ International Electro-technical Commission (or ISO/IEC) 14 443 specifications, a Ultra High Frequency Radio-Frequency IDentification (or UHF RFID), a Near Field Communication (or NFC) type technology or the like. Such an SR RF requires to be sufficiently close, for instance, up to 20 cm from a CTL enabled device (not represented), like e.g. a Point Of Sale (or POS) terminal, so as to exchange data between the phone 120 and the CTL enabled device.

For sake of simplicity, the mobile equipment 10, the first chip 110, the CTL mobile phone 120 and the second chip 130 are termed infra the first phone 10, the SE1 110, the second phone 120 and the SE2 130 respectively.

Only one SE1 110 and one SE2 130 are represented at an emitter device side and at a receiver device side. Nevertheless, the invention is also applicable to several devices with none, one or several SEs, at the emitter device side and/or at the receiver device side.

On the contrary, the bank server 16 and two servers 14 and 18 are represented. However, the invention is still applicable to only one server that plays the roles of the bank server 16 and two servers 14 and 18 that are described infra. Alternately, the invention is still applicable to only one server that plays the roles of the two servers 14 and 18 that are described infra.

The SE1 110, like e.g. an embedded Universal Integrated Circuit Card (or eUICC), is soldered to a Printed Circuit Board (or PCB) of the first phone 10.

Alternatively, instead of an incorporated chip, the SE1 110 is incorporated within a card or a dongle that is removable from the first phone 10.

The first phone 10, as an SE1 110 hosting device, incorporates the SE1 110.

Alternately, instead of using the SE1 110, the first phone 10 stores, within its own memory (not represented), data stored within the SE1 110 as described infra.

The SE1 110 belongs to a first phone 10 user, as a possible subscriber to a service operator and preferably a mobile (radio-communication) network (not represented) operator.

The SE1 110 is able to communicate, through preferably a first phone 10 Man Machine Interface (or MMI), with the first phone 10 user, so as to launch a voucher transmission application supported by the SE1 110. An execution of the voucher transmission application allows requesting the first phone 10 user to transfer to a receiver to be identified by the first phone 10 user data corresponding to one or several vouchers to be determined with the first phone 10 user.

The SE1 110 includes one (or several) microprocessor(s) 112, as data processing means, one (or several) memory(ies) 114, as data storing means, and one (or several) I/O interface(s) 116 that are internally all connected, through an internal bidirectional data bus 113, to each other.

The I/O interface(s) 116 allow(s) communicating data from the internal chip components to the chip exterior and conversely.

The microprocessor 112 processe(s), control(s) and communicate(s) internally data with all the other components incorporated within the SE1 110 and, through the I/O interface(s) 116, with the chip exterior.

The microprocessor 112 executes an Operating System (or OS) and one or several applications.

The microprocessor 112 executes, in a preferred manner, one or several security applications.

The security applications include preferably a user authentication process to be used prior to accessing the memory 114. To authenticate successfully the user, the user has to provide a Personal Identity Number (or PIN), biometric data and/or the like, as user reference authentication data that is securely stored within the memory 114, that has to match the stored user reference authentication data.

The microprocessor 112 is preferably able to initiate actions, in order to interact directly with the outside world, in an independent manner of the SE1 110 hosting device. Such a capacity of interaction at the initiative of the SE1 110 is also known as a proactive capacity, in which the SE1 110 plays a role of a master while the first phone 10 plays a role of a slave. The SE1 110 is thus able to send, at its own initiative, through the first phone 10, to any device connected to the first phone 10, a proactive command for sending, for instance, through a network(s) (not represented), to the first server 14 data corresponding to one or several vouchers, one (or several) identifier(s) relating to a receiver device and preferably a corresponding signature.

The microprocessor 112 executes preferably an invention voucher transmission application.

The memory 114 stores preferably the invention voucher transmission application. The voucher transmission application processes data relating to a voucher(s).

Alternatively, instead of being supported by the SE1 110, the first phone 10 stores and executes the voucher transmission application.

The memory 114 (or a first phone 10 memory (not represented)) stores preferably a Uniform Resource Identifier (or URI), like e.g. a Uniform Resource Locator (or URL) and/or an Internet Protocol (or IP) type address or the like, as an identifier(s) relating to the first server 14 to be addressed.

The server identifier(s) is(are) used by the first phone 10 for transferring to the first server 14 notably data corresponding to one or several vouchers, like e.g. a transaction amount, and one (or several) identifier(s) relating to the SE2 130, like e.g. an IMSI and/or a Mobile Station International Subscriber Directory Number (or MSISDN), and preferably its (or their) signature.

The memory 114 stores preferably a ciphering key relating to a service operator or provider, like e.g. a public key relating to the first server 14 or a key shared between the SE1 110 and the first server 14, and an algorithm for ciphering data. The ciphering key is used for ciphering data to be sent and for getting corresponding enciphered data to be sent.

The memory 114 stores preferably a private signature key Ks relating to the SE1 110 and a signature algorithm for signing data. The memory 114 stores preferably a public signature key Kspub relating to the SE1 110. The private signature key Ks is used for signing data to be sent. The signature algorithm may be e.g. a River Shamir and Adleman (or RSA) type algorithm. The signature algorithm is used for signing the data to be sent including at least the data corresponding to one or several vouchers. A signature operation result is a voucher data signature. A corresponding addressee of the data to be sent and a cryptogram, as a voucher data signature, determines whether the signed data corresponds to the sent data that has been signed with the private signature key Ks of the originator of the sent data. The addressee of the sent data and the cryptogram is therefore able to determine whether the originator of the sent data is the genuine one, namely the one that signs the sent data, as data received by the addressee.

The SE1 110 is preferably configured to sign data to be sent by using the private signature key Ks. The data to be signed and a message M may be a message digest that represents a fingerprint of the data to be signed. The fingerprint may be a result of a hash function, like e.g. Secure Hash Algorithm (or SHA)-2.

The SE1 110 is adapted to send, through the first phone 10, by using a Long Range (or LR) RF link 13 (or an SR RF link) and via a network infrastructure, i.e. a mobile radio-communication and/or an Internet network (not represented), to the first server 14 the data corresponding to one or several vouchers, an identifier of the SE2 130 and the voucher data signature.

The memory 114 stores user data, like e.g. a Primary Account Number (or PAN), a first name, a last name, a birth date, a personal picture(s), a user identifier, a mail address of the user, a telephone number of the user, an email address of the user, a Session Initiation Protocol (or SIP) address of the user, a telecopy number of the user, a key(s) Ki associated with the user identifier, a PIN(s), a biometrics print(s) and/or other appropriate data.

The data to be sent may further include the PAN (and/or other data) and one or several identifiers relating to the SE2 130, such as an International Mobile Subscriber Identity (or IMSI) 2. The PAN allows identifying a user (bank) account which is to be debited for a purchase of one or several vouchers to access a service and/or a product(s).

The data to be sent may further include a transaction amount, so as to buy a corresponding number of vouchers that the SE1 110 user desires to transfer to the SE2 130 user, as a voucher receiver.

The memory 114 stores, preferably in a secure manner, one or several sets of data relating, each, to a subscription to a mobile network(s).

Each set of data, as wireless service data, relating to one subscription to one (or several) network(s) includes:

- an IMS11, as a subscriber and a service subscription identifier for accessing a mobile network;
- a key Ki1, as an authentication key, allowing to authenticate the concerned subscriber to the concerned mobile network;
- Milenage, as an authentication algorithm, allowing to authenticate the concerned subscriber to the concerned mobile network;
- one or several passwords, like e.g. a PIN, biometric data and/or one or several cryptographic algorithm(s), as data relating to a secret(s);
- a file system including one or several Elementary Files (or EF);
- one or several security keys, like e.g. a key(s) for signing data (to be sent) and/or a key(s) for encrypting/decrypting data; and/or
- one or several credentials, like e.g. a user name and/or an IDentifier (or ID) of the subscriber, as data relating to the user.

The memory 114 stores preferably one (or several) SIM type application(s).

The SIM type application(s) includes, among others, a SIM application for a Global System for Mobile communication (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the SE1 110 hosting device, like e.g. the first phone 10, to authenticate to one (or several) mobile network(s) (not represented) by using the subscription identifier(s), like e.g. an IMSI1, and a corresponding network authentication key, like e.g. Ki1.

The SE1 110 is connected, through a bi-directional contact link 11, to the first phone 10.

The invention does not impose any constraint as to a kind of the SE type.

As a removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card, a Multi-Media type Card (or MMC) or any other format card to be coupled or connected to a host device, like e.g. a terminal.

As an SE1 110 host device, it may be any electronic device comprising data processing means, data storing means and one or several I/O communication interfaces. The device may be any user terminal.

As a user terminal, it may be, for instance, a tablet, a game console, a netbook, a Personal Digital Assistant (or PDA), a Personal Computer (or PC), a mobile laptop and/or an electronic mobile equipment or accessory (e.g.: glasses, a watch or a jewel).

The first phone 10 is preferably able to interact with the SE1 110, so as to identify and authenticate, in particular, to the mobile network.

The first phone 10 is preferably provided with a display screen 102 and a keyboard 104, as MMI. The MMI allows the phone user to interact with the first phone 10 and preferably the SE1 110.

The first phone 10 user may use the first phone 10 MMI, so as to authenticate to the first server 14 by using e.g. a login/password as user credentials that are known to the first server 14.

Alternately, instead of a separate keyboard 104, the first phone 10 is equipped with a touch display screen (not represented) that incorporates a virtual keyboard that is displayed.

The first phone 10 is preferably further provided with a loudspeaker and a microphone, as MMI.

The first phone 10 includes one or several microprocessors (not represented), as data processing means, volatile and non-volatile memories (not represented), as means for storing data, and one or several I/O interfaces (not represented) linked together through a data and control bus (not represented).

The microprocessor processes and controls data within the first phone 10 and/or data to be exchanged with outside of the first phone 10. The microprocessor controls and communicates with all the components of the first phone 10, such as the I/O interfaces.

The first phone 10 memories store data notably relating to an OS and applications supported by the first phone 10.

The first phone 10 memories may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The first phone 10 memory stores an International Mobile Equipment Identity (or IMEI) and/or an email address, as an identifier(s) relating to the first phone 10.

The first phone 10 has an antenna 106 that allows communicating, Over The Air (or OTA), via the LR RF link 13, through the mobile network(s) (not represented), with the first server 14.

The mobile network(s) may include one or several cellular (tele)communication networks, like a Global System for Mobile Communications (or GSM), a General Packet Radio Service (or GPRS), a Universal Mobile Telecommunications System (or UMTS), an EDGE (acronym for "Enhanced Data Rates for GSM Evolution"), a Code Division Multiple Access (or CDMA), and/or a Long Term Evolution (or LTE) type network(s).

Such a cellular communication network set is not exhaustive but only for exemplifying purposes.

The first server 14 is connected, through the bi-directional wireless link 13, over the network(s) (not represented), to the first phone 10, as a (voucher) emitter device.

The first server 14 may be operated by a Mobile Network Operator, as an MNO or a Mobile Virtual Network Operator (or MVNO), a bank operator, a service provider or on its behalf.

The first server 14 is integrated within an entity of a system, as a back-end OTA or Over-The-Internet (or OTI) system.

The first server 14 is hosted by a computer with data processing means and data storing means.

The first server 14 supports preferably a signature verification application.

To verify a received signature S, the first server 14 analyses whether the following predetermined mathematical formula, as one example, is satisfied:

$$S^v \bmod m = M;$$

in which:

- S represents the signature;
- mod denotes the modulo function;
- (v, m) represents a couple of parameters relating to the public key Kspub in which v is a public exponent and m represents the RSA type modulus; and
- M denotes data to be signed and that accompanies the signature S.

Once the signature S is received, the first server 14 raises the signature S to the power of v (mod m) to get a resulting value. Then, the first server 14 compares the resulting value to the received message M, as data to be signed. Only when the resulting value matches the received message M, the first server 14 validates the received signature S.

Alternatively, instead of verifying the signature, when the first server 14 does not receive the public signature key Kspub relating to the SE1 110, the first server 14 verifies that a data structure relating to the received signature is or is not correct.

The first server 14 is identified preferably by data retrieved from either the first phone 10 or the SE1 memory 114.

The first server 14, as addressee of information to be sent over the first phone 10, may be identified by a URI, like a URL, a call phone number of a server, a video-conference call phone number of a server, an Internet address and/or an email address of a server relating to a service provider, as server identifier(s).

According to the invention, the first server 14 is configured to receive from an emitter device data corresponding to one or several vouchers, like e.g. a transaction amount, and one or several identifiers relating to a receiver device, such as e.g. an IMSI and/or a MSISDN.

The first server 14 may also be configured to receive corresponding data allowing to identify a user bank account to be debited.

Instead of receiving from the emitter device the data allowing to identify a user bank account to be debited, the first server 14 accesses a database in which there is a table of a correspondence between an emitter device identifier, like e.g. an IMSI and/or an MSISDN, and corresponding data allowing to identify a user bank account to be debited.

The first server 14 is preferably able to validate (or not) that a received signature S is valid and/or correct.

According to the invention, the first server 14 is configured to send to a bank server 16 a request for performing a payment transaction or a bank transfer accompanied with the data corresponding to one or several vouchers, data allowing to identify a user bank account to be debited and one or several identifiers relating to a receiver device, such as e.g. an IMSI and/or a MSISDN.

The first server 14 is connected, through a bi-directional wire link 15, to a bank server 16.

The first server 14 is preferably able to authenticate to the bank server 16.

The first server 14 may store a public key relating to the bank server 16, so as to cipher data by using the bank server public key.

The bank server 16 is hosted by a computer with data processing means and data storing means.

The bank server 16 is preferably able to authenticate to the first server 14.

The bank server 16 may store a public key relating to the first server 14, so as to cipher data by using the first server public key.

The bank server 16 is preferably able to authenticate to the second server 18.

The bank server 16 may store a public key relating to the second server 18, so as to cipher data by using the second server public key.

The bank server 16 is able to perform a payment transaction or a bank transfer by using data, like e.g. a PAN or the like, allowing to identify a user bank account to be debited and a transaction amount, to credit a receiver account.

The bank server 16 is connected, through a bi-directional wire link 17, to a second server 18.

The second server 18, like e.g. a Trusted Service Manager type server, may be operated by an MNO or a MVNO, a bank operator, a service provider or on its behalf.

The second server 18 is integrated within an entity of a system, as a back-end OTA or OTI system.

The second server 18 is hosted by a computer with data processing means and data storing means.

The second server 18 may support a signature verification application.

The second server 18 is identified preferably by data retrieved from either the first server 14 or the bank server 16.

The second server 18, as addressee of information to be sent over the bank server 16, may be identified by a URI, like a URL, a call phone number of a server, a video-conference call phone number of a server, an Internet address and/or an email address of a server relating to a service provider, as server identifier(s).

The second server 18 is preferably able to authenticate to the bank server 16.

The second server 18 may store a public key relating to the bank server 16, so as to cipher data by using the bank server public key.

According to the invention, the second server 18 is configured to receive from a bank server 16 a request for crediting an identified receiver device, like e.g. an IMSI2 and/or an MSISDN2, along with data corresponding to one or several vouchers, like e.g. a transaction amount.

The second server 18 accesses preferably a database in which there is a table of a correspondence between a transaction amount, as data corresponding to one or several vouchers, and a corresponding number of voucher(s) to be transferred.

The second server 18 is configured to retrieve, based on the data corresponding to one or several vouchers, like e.g. a transaction amount, voucher data.

The voucher data may include one or several elements of the following group:

- one or several identifiers relating to a retailer. The identified retailer is the one that authorize(s) to consume the concerned voucher(s) to access a service(s) and/or a product(s);
- one or several voucher reception applications to be installed onto a receiver device;
- one or several voucher types;
- data relating to a voucher description;
- one or several voucher cryptograms, like e.g. a voucher data signature cryptogram;
- one or several voucher security parameters, like e. g. a counter value, as a counter value relating to a threshold value that is not authorized to be exceeded for a consumption of the concerned voucher(s), an expiry date value that is not authorized to be exceeded to consume the concerned voucher(s), a security code to be used to consume the concerned voucher(s) and/or other data.

The second server 18 is connected, through a bi-directional wireless link 19, over a network(s) (not represented), to the second phone 120, as a (voucher) receiver device.

According to the invention, the second server 18 is configured to send to the identified receiver device a request for crediting an identified receiver device, like e.g. an IMSI2 and/or an MSISDN2, along with the voucher data, so as to credit the receiver.

The second phone 120 is preferably able to interact with the SE2 130, so as to identify and authenticate, in particular, to the network.

As an SE2 130 host device, it may be any electronic device comprising data processing means, data storing means and one or several I/O interfaces.

The device may be any user terminal.

As a user terminal, it may be, for instance, a tablet, a game console, a netbook, a PDA, a PC, a mobile laptop and/or an electronic mobile equipment or accessory (e.g.: glasses, a watch or a jewel).

The second phone 120 is preferably provided with a display screen 122 and a keyboard 124, as MMI. The MMI allows the phone user to interact with the second phone 120 and preferably the SE2 130.

Alternately, the second phone 120 is equipped with a touch display screen (not represented) that incorporates a virtual keyboard that is displayed.

The second phone 120 is preferably further provided with a loudspeaker and a microphone, as MMI.

The second phone 120 includes one or several microprocessors (not represented), as data processing means, volatile and non-volatile memories (not represented), as means for storing data, and one or several I/O interfaces (not represented) linked together through a data and control bus (not represented).

The microprocessor processes and controls data within the second phone 120 and/or data to be exchanged with outside of the second phone 120. The microprocessor controls and communicates with all the components of the second phone 120, such as the I/O interfaces.

The second phone 120 memories store data notably relating to an OS and applications supported by the second phone 120.

The second phone 120 memories may be constituted by one or several EEPROMs, one or several ROMs, one or several Flash memories, and/or any other memories of different types, like one or several RAMs.

The second phone 120 memory stores an IMEI2 and/or an email address, as an identifier(s) relating to the second phone 120.

The second phone 120 has a first antenna 126 that allows communicating, OTA, via the LR RF link 19, through the mobile network(s) (not represented), with the second server 18.

The mobile network(s) may include one or several cellular (tele)communication networks, like a GSM, a GPRS, a UMTS, an EDGE, a CDMA, and/or an LTE type network(s).

Such a cellular communication network set is not exhaustive but only for exemplifying purposes.

The second phone 120 includes a second antenna 128 and preferably a chip (not represented) that allow communicating, via an SR RF link (not represented), with an external CTL device, like e.g. a POS type terminal, so as to consume a voucher(s).

The SE2 130 is connected, through a bi-directional contact link 121, to the second phone 120.

The SE2 130, like e.g. an eUICC, is soldered to a PCB of the second phone 120.

Alternatively, instead of an incorporated chip, the SE2 130 is incorporated within a card or a dongle that is removable from the second phone 120.

The second phone 120, as an SE2 130 hosting device, incorporates the SE2 130.

Alternately, instead of using the SE2 130, the second phone 120 stores, within its own memory (not represented), data stored within the SE2 130 as described infra.

The invention does not impose any constraint as to a kind of the SE type.

As a removable SE, it may be a SIM type card, an SRM, a smart dongle of the USB type, a (micro-)SD type card, an MMC or any other format card to be coupled or connected to a host device, like e.g. a terminal.

The SE2 130 belongs to a second phone 120 user, as a possible subscriber to a service operator and preferably a mobile (radio-communication) network (not represented) operator.

The SE2 130 is able to communicate, through preferably a second phone 120 MMI, with the second phone 120 user, so as to launch, once installed, a voucher reception application supported by the SE2 130.

An execution of the voucher reception application may allow requesting the second phone 120 user an approval or a disapproval to transfer to the second phone 120 user, as identified originally by the first phone 10 user, voucher data.

The SE2 130 includes one (or several) microprocessor(s) 132, as data processing means, one (or several) memory(ies) 134, as data storing means, and one (or several) I/O interface(s) 136 that are internally all connected, through an internal bidirectional data bus 133, to each other.

The I/O interface(s) 136 allow(s) communicating data from the internal chip components to the chip exterior and conversely.

The microprocessor 132 processe(s), control(s) and communicate(s) internally data with all the other components incorporated within the SE1 110 and, through the I/O interface(s) 116, with the chip exterior.

The microprocessor 132 executes an OS and one or several applications.

The microprocessor 132 executes, in a preferred manner, one or several security applications.

The security applications include preferably a user authentication process to be used prior to accessing the memory 134. To authenticate successfully the user, the user has to provide a PIN, biometric data and/or the like, as user reference authentication data that is securely stored within the memory 134, that has to match the stored user reference authentication data.

The microprocessor 132 is preferably able to initiate actions, in order to interact directly with the outside world, in an independent manner of the SE2 130 hosting device. Such a capacity of interaction at the SE2 130 initiative allows the SE2 130 to play a role of a master while the second phone 120 plays a role of a slave. The SE2 130 is thus able to send, at its own initiative, through the second phone 10, to any device connected to the second phone 120, a proactive command for sending, for instance, through a network(s) (not represented), to the second server 18 a request for installing a voucher reception application. Such a voucher reception application also allows the SE2 130 user to consume a voucher(s).

The microprocessor 132 executes preferably an invention voucher reception application.

The memory 134 stores preferably the invention voucher reception application. The voucher reception application processes data relating to a voucher(s).

Alternatively, instead of being supported by the SE2 130, the second phone 120 stores and executes the voucher reception application.

The memory 134 (or a second phone 120 memory (not represented)) stores preferably a URI, like e.g. a URL and/or an IP type address or the like, as an identifier(s) relating to the second server 18 to be addressed.

The memory 134 stores preferably a ciphering key relating to a service operator or provider, like e.g. a public key relating to the second server 18 or a key shared between the SE2 130 and the second server 18, and an algorithm for ciphering data. The ciphering key is used for ciphering data to be sent and for getting corresponding enciphered data to be sent.

The memory 134 stores, preferably in a secure manner, one or several sets of data relating, each, to a subscription to a mobile network(s).

Each set of data, as wireless service data, relating to one subscription to one (or several) network(s) includes:

- an IMSI2, as a subscriber and a service subscription identifier for accessing a mobile network;
- a key Ki2, as an authentication key, allowing to authenticate the concerned subscriber to the concerned mobile network;
- Milenage, as an authentication algorithm, allowing to authenticate the concerned subscriber to the concerned mobile network;
- one or several passwords, like e.g. a PIN, biometric data and/or one or several cryptographic algorithm(s), as data relating to a secret(s);
- a file system including one or several Elementary Files (or EF);
- one or several security keys, like e.g. a key(s) for signing data (to be sent) and/or a key(s) for encrypting/decrypting data; and/or
- one or several credentials, like e.g. a user name and/or an IDentifier (or ID) of the subscriber, as data relating to the user.

The memory 134 stores preferably one (or several) SIM type application(s).

The SIM type application(s) allow(s) the SE2 130 hosting device, like e.g. the second phone 120, to authenticate to one (or several) mobile network(s) (not represented) by using the subscription identifier(s), like e.g. an IMSI2, and a corresponding network authentication key, like e.g. Ki2.

Figure 2 depicts an exemplary embodiment of a message flow 20 that involves the SE1 110, the first server 14, the bank server 16, the second server 18 and the SE2 130.

It is assumed that the user of the first phone 10 desires to transfer to the user of the second phone 120 voucher data.

It is assumed that the first phone 10 exchanges with the first server 14 by using e.g. a HyperText Transfer Protocol (or HTTP) and/or Short Message Service (or SMS) type message(s). However, any other data communication protocol between the first phone 10 and the first server 14, like e.g. a secured data communication protocol (securing in confidentiality and/or in integrity the data thus exchanged) Transport Layer Security (or TLS) type protocol, may be used additionally to the HTTP and/or SMS protocol(s).

It is assumed that the second phone 120 exchanges with the second server 18 by using e.g. a HTTP and/or SMS type message(s). However, any other data communication protocol between the second phone 120 and the second server 18, like e.g. a secured data communication protocol (securing in confidentiality and/or in integrity the data thus exchanged) TLS type protocol, may be used additionally to the HTTP and/or SMS protocol(s).

Firstly, the first phone 10 user selects the voucher transmission application, so that the SE1 110 executes the voucher transmission application.

The first phone 10 connects to the first server 14.

It is assumed that the first phone 10 user is previously registered to the first server 14. During such a registration, the first phone 10 user provides her or his PAN (or the like), as data allowing to identify her or his bank (user) account.

The first phone 10 user authenticates preferably to the first server 14.

The first phone 10 user defines a transaction amount, like e.g. 20 euros or 20 US dollars, to be transformed to a corresponding voucher(s), and identifies a receiver of the concerned voucher(s).

The defined transaction amount and the identified receiver are data to be sent by the SE1 110, through the first server 14, the bank server 16 and the second server 18, to the SE2 130.

At least part of the data to be sent, namely at least the transaction amount, as data corresponding to one or several vouchers, may be signed, so as to prove the originator of the voucher emitter.

The data to be sent may be ciphered, so as to protect the data thus sent.

Optionally, the user of the SE1 110 (or the first phone 10) authenticates successfully to the first server 14.

The SE1 110 sends to the first server 14 a message 22 including the transaction amount, as data corresponding to one or several vouchers, and an IMSI2 and/or an MSISDN2, as an identifier(s) relating to a voucher receiver device.

The message 22 includes preferably, besides the transaction amount and the identified (voucher) receiver device, a signature of the transaction amount and possibly the identified (voucher) receiver device.

Optionally, the first server 14 sends to the SE2 130 a message 24 including a request for getting a user approval for getting the voucher data accompanied with an IMSI1 and/or a MSISDN1, as an identifier(s) relating to the SE1 110, as an original requester and a (voucher) emitter device. The SE2 130 requests 25, preferably through the second phone 120 MMI, from its user, an approval or a disapproval for getting the voucher data. If the SE2 130 user does not give her or his approval, then the SE2 130 aborts 27 the launched process for transferring a voucher(s) and the first server 14 is informed, so that the first server 14 removes preferably the whole information relating to the SE2 130, as the receiver device. Otherwise, i.e. if the SE2 130 user approves getting the voucher data, the SE2 130 sends to the first server 14, as a request response, an approval 26 for getting the voucher data.

The first server 14 deciphers possibly the received ciphered data, so as to get data in plain text, by using a decipherment key relating to the first server 14 or a key shared with the SE1 110.

The first server 14 verifies (not represented) preferably the received signature, when present. And only if the first server 14 verifies successfully the signature and/or the data format of the signature, the first server 14 continues the launched process for transferring a voucher(s). Otherwise, i.e. if the first server 14 does not verify successfully the signature and/or the data format of the signature, the first server 14 aborts the launched process for transferring a voucher(s).

The first server 14 authenticates (not represented) preferably successfully to the bank server 16. Otherwise, i.e. if the bank server 16 does not authenticate successfully the first server 14, the bank server 16 aborts the launched process for transferring a voucher(s).

The bank server 16 authenticates (not represented) preferably successfully to the first server 14. Otherwise, i.e. if the first server 14 does not authenticate successfully the bank server 16, the first server 14 aborts the launched process for transferring a voucher(s).

The first server 14 sends to the bank server 16 a message 28 including a request for performing a bank transfer accompanied with the transaction amount, her or his PAN or the like, as data relating to a user account to be debited, and the SE2 130, as the identified receiver device.

The bank server 16, after one or several possible successful data verification(s), like e.g. a verification that the transaction amount does not exceed an available amount on the provided user (bank) account, and/or processing, performs the (requested) bank transfer by using preferably the provided user (bank) account while debiting it with the transaction amount that corresponds to the requested voucher(s).

Once the bank transfer is carried out, the bank server 16 sends to the second server 18 a message 210 including a request for crediting the SE2 130 and the transaction amount, as the data corresponding to one or several vouchers.

The second server 18 gets, based on the transaction amount, notably a corresponding number of voucher(s) to be transferred, as voucher data.

Once the voucher data is retrieved, the second server 18 sends, preferably in a ciphered manner, like e. g. by using a Secure Channel type Protocol, such as SCP02, to the second phone 120 a message 212 including a request for crediting an SE2 130 user account and the voucher data.

The request for crediting an SE2 130 user account includes a script and executable data intended for the SE2 130.

Alternatively, instead of addressing the SE2 130, as the voucher receiver device, the second server 18 addresses the second phone 120, as the voucher receiver device. In such an embodiment, the last message includes a request for crediting a second phone 120 user account and the voucher data. According to such an embodiment, the request for crediting a second phone 120 user account includes a command for crediting the second phone 120 user account.

The second phone 120, possibly after an installation and an execution of a voucher terminal application, executes the script and sends to the SE2 130 the executable data. Then, the SE2 130 executes the executable data by crediting to the receiver device user account the voucher data.

Once the voucher data has been received by the SE2 130 possibly after an installation and execution of a voucher reception application, the SE2 130 sends preferably to the second server 18 an acknowledgment of receipt (not represented).

Then, the SE2 130 is ready to consume the concerned voucher(s) included in the received voucher data by using preferably a payment application, like e.g. an Europay, Mastercard and Visa (or EMV) type application.

The SE2 130 user is thus able to buy one or several product(s) and/or to access one or several service(s).

The invention on-line voucher transfer operation from an emitter device to a receiver device allows transferring, in a seamless, efficient, quick and simple manner, voucher data.

The emitter device may further generate a voucher data signature that can be verified by the first 14, the bank 16, the second 18 server and/or the receiver device.

The invention on-line voucher transfer operation may also therefore be secure.

The invention solution is further compliant with the existing CTL enabled devices, as receiver devices, like e.g. NFC enabled phones, and the POS infrastructure, when the voucher(s) is(are) locally, through an SR RF link, consumed.

The invention solution is compliant with the existing devices and the merchant sites, when the voucher(s) is(are) remotely consumed.

The embodiment that has just been described is not intended to limit the scope of the concerned invention. Other embodiments may be given. As another embodiment example, instead of the SE1 110, the first phone 110 supports the voucher transmission application that carries out the functions that the SE1 110 carries out and that are described supra. According to still another embodiment, instead of the SE2 130, the second phone 120 supports the voucher reception application that carries out the functions that the SE2 130 carries out and that are described supra.

**Claims**

1. A method (20) for transferring voucher data, **characterized in that** the method comprises the following steps:

   - an emitter device (110) sends to a first server (14) data (22) corresponding to at least one voucher and at least one identifier relating to a receiver device;
   - the first server sends to a bank server (16) a request (28) for performing a bank transfer accompanied with the data corresponding to at least one voucher, data relating to a bank account to be debited and the at least one identifier relating to a receiver device;
   - the bank server sends to a second server (18) a request (210) for crediting the identified receiver device accompanied with the data corresponding to at least one voucher;
   - the second server gets, based upon the data corresponding to at least one voucher, voucher data;
   - the second server sends to the receiver device a request (212) for crediting a receiver device account accompanied with the voucher data.

2. Method according to claim 1, wherein, prior to sending from the emitter device to the first server the data corresponding to at least one voucher and the at least one identifier relating to a receiver device, the method further includes a step in which an emitter device user authenticates successfully to the first server.

3. Method according to claim 1 or 2, wherein, prior to sending from the emitter device to the first server the data corresponding to at least one voucher and the at least one identifier relating to a receiver device, the emitter device signs at least the data corresponding to at least one voucher and sends a signature along with the data corresponding to at least one voucher and the at least one identifier relating to a receiver device.

4. Method according to any of claims 1 to 3, wherein, prior to sending from the first server to the bank server the request for performing a bank transfer accompanied with the data corresponding to at least one voucher, the data relating to a bank account to be debited and the at least one identifier relating to a receiver device, the method further includes the following steps:

   - the first server sends to the identified receiver device a request (24) for getting a user approval for getting the voucher data accompanied with at least one identifier relating to the emitter device;
   - the receiver device requests, from a receiver device user, an approval or a disapproval for getting the voucher data;
   - only if the receiver device user approves getting the voucher data, then the receiver device sends to the first server an approval (26) for getting the voucher data.

5. Method according to any of claims 1 to 4, wherein, prior to sending from the first server to the bank server the request for performing a bank transfer accompanied with the data corresponding to at least one voucher, the data relating to a bank account to be debited and the at least one identifier relating to a receiver device, the first server authenticates successfully to the bank server and/or the bank server authenticates successfully to the first server.

6. Method according to any of claims 1 to 5, wherein the request for crediting a receiver device user account includes a command for crediting the receiver device user account.

7. Method according to any of claims 1 to 5, wherein, a secure element being coupled or connected to the receiver device, the request for crediting a receiver device user account including a script and executable data intended for the secure element, the method further includes the following steps:

   - the receiver device executes the script and sends to the secure element the executable data;
   - the secure element executes the executable data by crediting to the receiver device user account the voucher data.

8. Method according to any of claims 1 to 7, wherein the voucher data includes at least one element of a group comprising:

   - at least one identifier relating to at least one retailer;
   - at least one voucher reception application to be installed onto the receiver device;
   - at least one voucher type;
   - voucher description data;
   - at least one voucher cryptogram;
   - at least one voucher security parameter.

9. A first server (14) for transferring voucher data, **characterized in that** the first server is configured:

   - to receive from an emitter device data corresponding to at least one voucher and at least one identifier relating to a receiver device; and
   - to send to a bank server a request for performing a bank transfer accompanied with the data corresponding to at least one voucher, data relating to a bank account to be debited and the at least one identifier relating to a receiver device.

10. A second server (18) for transferring voucher data, **characterized in that** the second server is configured:

   - to receive from a bank server a request for crediting an identified receiver device accompanied with data corresponding to at least one voucher;
   - to get, based upon the data corresponding to at least one voucher, voucher data; and
   - to send to the identified receiver device a request for crediting the receiver device accompanied with the voucher data.

**Fig. 1**

**Fig. 2**

Europäisches
Patentamt

European
Patent Office

Office européen
des brevets

# EUROPEAN SEARCH REPORT

**Application Number**

EP 15 30 5350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/012723 A1 (LOBMAIER MARKUS [AT]) 9 January 2014 (2014-01-09) * abstract; figures * * paragraphs [0014], [0015], [0056] - [0083] * | 1-10 | INV. G06Q20/02 G06Q20/04 G06Q20/32 G06Q20/38 G06Q20/22 |
| A | WO 2010/060661 A1 (ALCATEL LUCENT [FR]; AGARWAL ASHWINI KUMAR [IN]) 3 June 2010 (2010-06-03) * abstract; figures * * paragraphs [0017] - [0019] * | 1-10 | |
| A | US 5 903 880 A (BIFFAR PETER C [US]) 11 May 1999 (1999-05-11) * abstract; figures * * column 5, line 62 - column 12, line 31 * | 1-10 | |
| A | US 2014/012749 A1 (LEE SANG-YUP [KR] ET AL) 9 January 2014 (2014-01-09) * abstract; figures * | 1-10 | |
| A | WO 2005/086593 A2 (LITTLE WORLD PRIVATE LTD A [IN]; GUPTA ANURAG [IN]; PANDA LOKANATH [IN]) 22 September 2005 (2005-09-22) * abstract; figures * | 1-10 | TECHNICAL FIELDS SEARCHED (IPC) G06Q |
| A | GB 2 372 615 A (MACNAMEE ROBERT JOSEPH GERARD [GB]) 28 August 2002 (2002-08-28) * abstract; figures * | 1-10 | |

The present search report has been drawn up for all claims

| Place of search | Date of completion of the search | Examiner |
|---|---|---|
| The Hague | 20 August 2015 | Breugelmans, Jan |

EPO FORM 1503 03.82 (P04C01)

**EP 3 067 848 A1**

## ANNEX TO THE EUROPEAN SEARCH REPORT
## ON EUROPEAN PATENT APPLICATION NO.

EP 15 30 5350

20-08-2015

| Patent document cited in search report | | Publication date | Patent family member(s) | | Publication date |
|---|---|---|---|---|---|
| US 2014012723 | A1 | 09-01-2014 | US | 2014012723 A1 | 09-01-2014 |
| | | | WO | 2012104417 A1 | 09-08-2012 |
| WO 2010060661 | A1 | 03-06-2010 | CN | 102224515 A | 19-10-2011 |
| | | | EP | 2370941 A1 | 05-10-2011 |
| | | | JP | 5367087 B2 | 11-12-2013 |
| | | | JP | 2012510121 A | 26-04-2012 |
| | | | KR | 20110089295 A | 05-08-2011 |
| | | | US | 2011246360 A1 | 06-10-2011 |
| | | | WO | 2010060661 A1 | 03-06-2010 |
| US 5903880 | A | 11-05-1999 | US | 5903880 A | 11-05-1999 |
| | | | US | 6047269 A | 04-04-2000 |
| | | | US | 6205435 B1 | 20-03-2001 |
| US 2014012749 | A1 | 09-01-2014 | KR | 20140003840 A | 10-01-2014 |
| | | | US | 2014012749 A1 | 09-01-2014 |
| WO 2005086593 | A2 | 22-09-2005 | EP | 1828998 A2 | 05-09-2007 |
| | | | WO | 2005086593 A2 | 22-09-2005 |
| GB 2372615 | A | 28-08-2002 | NONE | | |

For more details about this annex : see Official Journal of the European Patent Office, No. 12/82